# EUROPÄISCHE PATENTSCHRIFT

(11) **EP 3 775 658 B1**
(45) Veröffentlichungstag und Bekanntmachung des Hinweises auf die Patenterteilung: **09.07.2025**
(21) Anmeldenummer: 19715039.4
(22) Anmeldetag: 28.03.2019
(51) Int. Cl.: F16L 37/088

(54) **ANSCHLUSSVORRICHTUNG FÜR MEDIENLEITUNGEN**
CONNECTING DEVICE FOR MEDIA LINES
DISPOSITIF DE RACCORDEMENT POUR CONDUITES DE FLUIDE

(30) Priorität: 28.03.2018 DE 102018107507
(43) Veröffentlichungstag der Anmeldung: 17.02.2021
(73) Patentinhaber: Voss Automotive GmbH, 51688 Wipperfürth (DE)
(72) Erfinder: WASCHKEWITZ, Markus, 51702 Bergneustadt (DE); HAGEN, Harald, 51688 Wipperfürth (DE); KLEHR, Adrian, 58802 Balve (DE); ENGELHARD, Frank, 42929 Wermelskirchen (DE); HESS, Jochem-Andreas, 51688 Wipperfürth (DE); ROSOWSKI, Evelin, 51679 Wipperfürth (DE); HATOUM, Ihab, 51515 Kürten (DE); HASBERG, Markus, 51688 Wipperfürth (DE); BROMBACH, Michael, 51789 Lindlar (DE)
(74) Vertreter: Dr. Solf & Zapf Patent- und Rechtsanwalts PartG mbB
(86) Internationale Anmeldenummer: PCT/EP2019/057842
(87) Internationale Veröffentlichungsnummer: WO 2019/185783

(56) Entgegenhaltungen:
- EP-A1- 2 799 751
- WO-A1-01/36810
- WO-A1-2011/106805
- DE-A1- 102016 109 051
- DE-U1- 20 012 524
- US-A- 5 683 117

## Beschreibung

Die Erfindung betrifft eine Anschlussvorrichtung für Medienleitungen, mit mindestens einem Kupplungselement, mindestens einem Einsatzteil und mindestens einem Befestigungselement, wobei das Kupplungselement mindestens eine Anschlussöffnung und mindestens einen Fluidkanal aufweist, wobei das Einsatzteil, insbesondere in einer Axialrichtung, die parallel bzw. koaxial zu einer Mittelachse der Anschlussöffnung orientiert ist, zumindest teilweise in die Anschlussöffnung einbringbar ist. Das Einsatzteil ist mittels des Befestigungselements an dem Kupplungselement befestigbar.

Anschlussvorrichtungen für Medienleitungen sind im Stand der Technik in einer Vielzahl von Ausgestaltungen bekannt. Bei derartigen Anschlussvorrichtungen dienen die Anschlussöffnungen dem Verbinden des Fluidkanals der Anschlussvorrichtung mit einer Medienleitung. Beispielsweise werden in Anschlussöffnungen eines Kupplungselements sogenannte Einpresspatronen eingesetzt, die innerhalb der Anschlussöffnung fest mit dem Kupplungselement verbunden werden und eine Verbindungsschnittstelle für eine Medienleitung, beispielweise eine Aufnahme für einen Verbindungsstecker, bereitstellen.

Unter der Bezeichnung "Medienleitung" sind grundsätzlich Leitungsverbindungen für beliebige Strömungs- und/oder Druckmedien, wie Gase oder Flüssigkeiten, zu verstehen. Medienleitungen sind grundsätzlich Rohr- oder Schlauchleitungen sowie deren Anschluss- und Verbindungselemente, die Teil eines Systems zur Führung eines Mediums sind. Insbesondere sind derartige Medienleitungen aus Kunststoff hergestellt.

US 5,683,117 A offenbart einen Rohrverbinder mit einer Rückhalteklammer zum Fixieren einer Leitung. Die Rückhalteklammer ist eine Öffnung umgebend angeordnet und weist ein Paar elastischer Schenkel auf, die sich von einem bogenförmigen Endteil erstrecken. Jeder der Schenkel umfasst einen Endfinger, der einen spitzen Winkel mit einer Außenkante des Schenkels bildet und der um die Außenseite des Verbindergehäuses einrastet, wenn die Rückhalteklammer in einen der beiden gegenüberliegenden Schlitze oder Öffnungen im Gehäuse eingesetzt wird.

WO 01/36810 A1 offenbart einen Verbinder für eine Kraftstoffleitung für ein Fahrzeug. Der Verbinder weist eine Verriegelung auf, die Führungselemente umfasst, die in einem Abstand gegenüberliegend angeordnet sind. Ferner weist die Verriegelung Druckelemente auf, die vertikal von den gegenüberliegenden Seiten der Führungselemente entfernt angeordnet sind, sowie zwei Paar gewellte elastische Elemente, die an den oberen und unteren Abschnitten der Führungselemente angeordnet sind.

EP 2 799 751 A1 offenbart eine Fluidleitungskupplung zum mechanischen und fluidischen Kuppeln eines fluidführenden ersten Bauteils mit einem fluidführenden zweiten Bauteil. Die Fluidleitungskupplung weist ferner einen Rohrkörper auf, den das erste Bauteil aufweist oder der am ersten Bauteil anbringbar ist, ferner einen koaxial in den Rohrkörper einsteckbaren Stutzen, den das zweite Bauteil aufweist oder der am zweiten Bauteil anbringbar ist.

Die aus dem Stand der Technik bekannten Anschlussvorrichtungen weisen oftmals einen hohen Montageaufwand auf und/oder sind nicht zum Aufbringen der für Druckanwendungen erforderlichen Haltekräfte geeignet, was zu einer Beschädigung der Anschlussvorrichtung führen kann. Hinzu kommt, dass aus dem Stand der Technik bekannte Anschlussvorrichtungen anfällig für Fehlmontagen sind.

Der Erfindung liegt deshalb die Aufgabe zugrunde, eine Anschlussvorrichtung anzugeben, bei der der Aufwand zur Montage reduziert ist, mit der große Haltekräfte aufbringbar sind und die das Risiko von Fehlmontagen reduziert.

Die Aufgabe wird erfindungsgemäß durch die Merkmale des Anspruchs 1 gelöst. Das Befestigungselement ist, insbesondere relativ zu einer Mittelachse der Anschlussöffnung, bevorzugt in einer gedachten Bewegungsebene, zu der die Mittelachse der Anschlussöffnung eine Ebenennormale ist, bewegbar an dem Kupplungselement gehalten und das Befestigungselement weist mindestens zwei Steuerflächen auf. Beim Einbringen des Einsatzteils in die Anschlussöffnung unter Wirkung einer Montagekraft wirkt das Einsatzteil derart auf die Steuerfläche, dass das Befestigungselement aus einer Ausgangsposition, in der das Befestigungselement ein Einsatzteil verrasten würde, entgegen einer Rückstellkraft, insbesondere relativ zur Mittelachse der Anschlussöffnung, bevorzugt in der Bewegungsebene, bewegt wird.

Die der durch das Einbringen des Einsatzteils hervorgerufenen Bewegung des Befestigungselements entgegenwirkende Rückstellkraft wird durch eine, insbesondere durch die Bewegung verursachte, zumindest teilweise elastische Verformung des Befestigungselements bewirkt. Insbesondere bei ausreichender Montagekraft gleitet das Einsatzteil an der Steuerfläche vorbei, so dass das Befestigungselement unter Wirkung der Rückstellkraft wieder entgegengesetzt in Richtung der Ausgangsposition bewegt wird und mit dem Einsatzteil formschlüssig verrastet. Das Befestigungselement befindet sich folglich in einer Ausgangsposition, wird durch das Einbringen des Einsatzteils temporär in eine Zwischenposition ausgelenkt und bewegt sich anschließend unter Wirkung der Rückstellkraft wieder in die Ausgangsposition, wobei das Einsatzteil formschlüssig verriegelt wird. Das Einsatzteil stellt eine Verbindungsschnittstelle für eine Medienleitung bereit.

Die Montagekraft beträgt üblicherweise zwischen 70 N und 90 N, insbesondere etwa 80 N. Bei dieser Montagekraft ist sichergestellt, dass das Einsatzteil sicher mit dem Kupplungselement bzw. dem Befestigungselement verrastet. Die Rückstellkraft des Befestigungselements beträgt zwischen 30 N und 60 N.

Die im Wesentlichen parallel zur Mittelachse der Anschlussöffnung wirkende Montagekraft ist dann ausreichend, wenn zumindest mit dem auf die Steuerfläche wirkenden Teil der Montagekraft die Rückstellkraft überwunden wird, bis das Einsatzteil an der Steuerfläche ab- bzw. vorbeigleiten kann und eine Bewegung des Befestigungselements in entgegengesetzter Richtung freigegeben wird. Dabei wird ein Teil der Montagekraft über die Steuerflächen auf das Befestigungselement übertragen und ruft eine Bewegung des Befestigungselements in einer Bewegungsebene hervor. Diese Bewegung ist wiederum ursächlich für die Verformung des Befestigungselements, wodurch die Rückstellkraft entsteht. Die Mittelachse der Anschlussöffnung ist eine Ebenennormale zur Bewegungsebene des Befestigungselements. Die Montagekraft muss insgesamt groß genug sein, um sowohl eine Verschiebung des Befestigungselements über die Steuerfläche hervorzurufen, als auch die Reibungskräfte am Einsatzteil und am Befestigungselement sowie die Verformungskräfte für das Dichtmittel am Einsatzteil beim Einbringen zu überwinden.

Die Montagekraft bzw. die Dauer des Aufbringens der Montagekraft ist dann nicht ausreichend, wenn das Befestigungselement über die Steuerflächen nicht so weit bewegt wird, dass das Einsatzteil an der Steuerfläche vorbei- bzw. abgleiten kann. Die Rückstellkraft ist für diesen Fall konstruktiv so eingestellt und gewählt, dass das Befestigungselement unter Wirkung der Rückstellkraft wieder in die Ausgangsposition bewegt wird und das Einsatzteil mittels der Steuerfläche zumindest teilweise wieder aus der Anschlussöffnung herausgedrückt wird. Dadurch wird sichergestellt, dass eine Fehlmontage sofort zu erkennen ist.

Die Rückstellkraft ist in jedem Fall so gewählt und konstruktiv eingestellt, beispielsweise über die Wahl des Materials des Befestigungselements und/oder den Grad der Verformung des Befestigungselements, dass das Befestigungselement nicht in einer sich selbst blockierenden Zwischenposition verbleibt. Das Befestigungselement ist also folglich bei korrekter Montage entweder in der Ausgangsposition und verriegelt das Einsatzteil oder das Befestigungselement ist nach der Auslenkung wieder in der Ausgangsposition und hat das Einsatzteil entgegen der Montagerichtung - entlang der Mittelachse der Anschlussöffnung - wieder aus der Anschlussöffnung herausgedrückt.

Ferner ist vorgesehen, dass das Befestigungselement in mindestens einer Ausnehmung an dem Kupplungselement geführt ist. Die Ausnehmung umgibt die Anschlussöffnung zumindest teilweise. Die Ausnehmung durchtritt die die Anschlussöffnung umgebende Wand zumindest teilweise und/oder vollständig. Aus Stabilitätsgründen ist vorgesehen, dass die Ausnehmung mindestens einen Steg, vorzugsweise zwischen zwei und fünf Stege, aufweist, und dass der Steg bzw. die Stege die Ausnehmung stabilisierend übergreifen.

Der Steg bzw. die Stege verhindern, dass die die Ausnehmung umgebende Wand im Bereich der Ausnehmung zu stark geschwächt wird und verhindern eine Separierung der verbleibenden Bereiche der Wand, insbesondere in einer Richtung parallel zur Mittelachse der Anschlussöffnung. Vorzugsweise ist auch vorgesehen, dass mindestens ein Steg, insbesondere zwei Stege, bevorzugt vier Stege, so angeordnet sind, dass durch die Stege die Bewegbarkeit des Befestigungselements begrenzt wird, insbesondere so, dass der Steg oder die Stege die Lage der Zwischenposition definiert bzw. definieren. In der Zwischenposition kann das Einsatzteil an den Steuerflächen vorbeigleiten, so dass anschließend die Steuerflächen nicht mehr mit einer Kraft beaufschlagt sind, wodurch die Rückstellkraft das Befestigungselement in die Ausgangsposition bewegt.

Ferner ist vorgesehen, dass das Befestigungselement mindestens zwei Steuerflächen aufweist, die eine Neigung zwischen 30° und 50° zu der Bewegungsebene des Befestigungselements aufweisen. Für eine gleichmäßige Kraftübertragung auf das Befestigungselement ist es vorteilhaft, wenn zwei, insbesondere nebeneinander angeordnete, Steuerflächen vorgesehen sind. Vorzugsweise sind die Steuerflächen identisch ausgebildet und identisch geneigt.

Es ist auch vorgesehen, dass die Steuerflächen konvex oder konkav gewölbt sind. Die Steuerflächen sind jedenfalls so ausgebildet, dass eine parallel zur Mittelachse der Anschlussöffnung gerichtete Kraft auf die Steuerflächen eine Bewegung des Befestigungselements, insbesondere in einer Bewegungsebene, zu der die Kraft orthogonal gerichtet ist, bewirkt.

Insbesondere um die Haltekräfte zu steigern, ist vorgesehen, dass das Befestigungselement mindestens vier, bevorzugt mindestens sechs Rastflächen aufweist, die im Montagezustand formschlüssig mit dem Einsatzteil, insbesondere einem Befestigungskragen am Einsatzteil, zusammenwirken.

Beim Einbringen des Einsatzteils werden die Rastflächen mit dem Befestigungselement derart verschoben, dass das Einsatzteil an ihnen vorbeitreten kann. Wenn das Einsatzteil dann an den Steuerflächen vorbeigeglitten ist und derart tief in die Anschlussöffnung eingebracht ist, dass das Befestigungselement unter Wirkung der Rückstellkraft wieder in seine Ausgangsposition bewegt wird, werden auch die Rastflächen in Positionen bewegt, in denen sie formschlüssig mit dem Einsatzteil, insbesondere einem Befestigungskragen am Einsatzteil, zusammenwirken und ein Heraustreten des Einsatzteils in einer Richtung parallel zur Mittelachse der Anschlussöffnung, insbesondere entgegen der Montagerichtung, verhindern. Die Rastflächen sind vorzugsweise derart angeordnet, dass sie in der Ausgangsposition die Ausnehmung in der die Anschlussöffnung umgebende Wand des Kupplungselements durchtreten.

Eine weitere Ausgestaltung der Anschlussvorrichtung sieht vor, dass mindestens eine Rastfläche an einem Ansatz des Befestigungselements ausgebildet ist, und dass an dem Ansatz auch eine Steuerfläche ausgebildet ist. Vorzugsweise ist die Steuerfläche angrenzend an die Rastfläche ausgebildet. Vorzugsweise weist das Befestigungselement mindestens zwei oder eine Mehrzahl von Ansätzen auf, und an jedem Ansatz ist mindestens eine Rastfläche und/oder mindestens eine Steuerfläche ausgebildet. Vorzugsweise ist an einer Seite eines Ansatzes eine Rastfläche und an einer gegenüberliegenden Seite des Ansatzes eine Steuerfläche ausgebildet. Durch eine Neigung der Steuerfläche ist die Steuerfläche insbesondere angrenzend an die Rastfläche ausgebildet.

Gemäß einer weiteren Ausgestaltung der Anschlussvorrichtung ist vorgesehen, dass das Befestigungselement derart ausgebildet ist, dass es das Kupplungselement und damit auch im Montagezustand das eingebrachte Einsatzteil zumindest teilweise umgreift, nämlich so, dass ein erster Endbereich und ein zweiter Endbereich des Befestigungselements gegenüberliegend zueinander angeordnet sind, insbesondere auf gegenüberliegenden Seiten der Mittelachse der Anschlussöffnung. Dazu hat es sich als vorteilhaft herausgestellt, wenn das Befestigungselement in Draufsicht einen im Wesentlichen C-förmigen Querschnitt aufweist. Das Befestigungselement weist beispielsweise zwei, insbesondere gebogene, Schenkel und einen, insbesondere gebogenen, die Schenkel verbindenden Rücken auf. Das Befestigungselement erstreckt sich in der Draufsicht folglich über einen Kreisbogen mit einem Winkel zwischen 250° und 270°.

Dadurch, dass das Befestigungselement das Kupplungselement zumindest teilweise umgreift, insbesondere C-förmig ausgebildet ist, werden die beiden Endbereiche des Befestigungselements bei einer Bewegung aus der Ausgangsposition voneinander weg gespreizt, wodurch die Rückstellkraft zumindest teilweise verursacht wird.

In diesem Zusammenhang hat sich insbesondere als vorteilhaft herausgestellt, wenn gemäß einer weiteren Ausgestaltung vorgesehen ist, dass im ersten Endbereich und/oder im zweiten Endbereich des Befestigungselements mindestens ein Führungsansatz ausgebildet ist, vorzugsweise mindestens zwei Führungsansätze an jedem Endbereich ausgebildet sind. Der Führungsansatz bzw. die Führungsansätze erstrecken sich im Montagezustand vorzugsweise in beiden Endbereichen, in einer Richtung parallel zur Mittelachse der Anschlussöffnung nach oben und nach unten.

Zu den Führungsansätzen korrespondierend weist das Kupplungselement für jeden Führungsansatz jeweils eine Führungsfläche auf, an der der jeweilige Führungsansatz bei einer Bewegung des Befestigungselements aus der Ausgangsposition entlanggleitet. In der Ausgangsposition liegen die Führungsansätze vorzugsweise bündig an den Führungsflächen an. Durch die konstruktive Anordnung und Ausgestaltung des Führungsansatzes selbst und relativ zu den Führungsflächen, kann der Grad der elastischen Verformung des Befestigungselements bei einer Bewegung in der Bewegungsebene, ausgehend von der Ausgangsposition, bestimmt werden und damit die Größe der Rückstellkraft eingestellt werden. Vorteilhaft ist vorgesehen, dass die Führungsfläche im Wesentlichen tangential zu einem gedachten Kreis um die Mittelachse und die Anschlussöffnung orientiert ist.

Die Rückstellkraft ist folglich über die Wahl des Materials des Befestigungselements, die Materialstärke des Befestigungselements in den verformten Bereichen und/oder die Ausrichtung der Führungsansätze und der Führungsflächen einstellbar.

Gemäß einer weiteren Ausgestaltung hat sich zudem als vorteilhaft herausgestellt, wenn vorgesehen ist, dass die mit dem ersten Endbereich und dem zweiten Endbereich, insbesondere mit den dort angeordneten Führungsansätzen, zusammenwirkenden Führungsflächen entgegengesetzt zueinander geneigt sind.

Insbesondere um die Sicherheit der Befestigung des Befestigungselements weiter zu steigern, ist gemäß einer weiteren Ausgestaltung vorgesehen, dass das Befestigungselement, insbesondere mindestens in dem ersten Endbereich und/oder mindestens in dem zweiten Endbereich, jeweils mindestens einen Rastvorsprung aufweist, und dass jeder Rastvorsprung im Montagezustand in einen Rastrücksprung am Einsatzteil eingreift, insbesondere dass der Rastvorsprung bzw. die Rastvorsprünge in radialer Richtung bewegbar ist bzw. sind. Dadurch, dass der Rastvorsprung jeweils am ersten Endbereich und am zweiten Endbereich des Befestigungselements angeordnet ist, wird er bei einer durch die Bewegung des Befestigungselements hervorgerufenen Verformung der Schenkel des Befestigungselements ebenfalls nach außen bewegt, wodurch das Einsatzteil eingebracht werden kann. Wird das Befestigungselement wieder in Richtung der Ausgangsposition bewegt, werden die Rastvorsprünge an den Endbereichen des Befestigungselements vorzugsweise im Wesentlichen in radialer Richtung auf die Mittelachse der Anschlussöffnung zu bewegt und greifen dann in an dem Einsatzteil vorgesehene Rastrücksprünge formschlüssig ein.

Vorzugsweise um den Bauraum zu verringern, ist gemäß einer weiteren Ausgestaltung der Anschlussvorrichtung vorgesehen, dass das Einsatzteil mindestens eine Abflachung, insbesondere mindestens zwei oder vier gegenüberliegend angeordnete Abflachungen am Außenumfang aufweist, und dass die Anschlussöffnung mindestens eine korrespondierende Abflachung, insbesondere mindestens zwei oder vier gegenüberliegend angeordnete Abflachungen, am Innenumfang aufweist. Das Einsatzteil ist bei einer Abflachung nur in einer Ausrichtung, bei zwei Abflachungen in zwei Ausrichtungen in die Anschlussöffnung einbringbar. Das hat den Vorteil, dass nach der Montage des Einsatzteils in der Anschlussöffnung ein Verdrehen des Einsatzteils verhindert wird. Ferner wird durch die Abflachung die konstruktive Gestaltung einer kompakteren Anschlussvorrichtung ermöglicht.

Eine weitere Ausgestaltung des Befestigungselements sieht vor, dass das Befestigungselement mindestens eine Sperrkante aufweist, insbesondere dass die Sperrkante im Montagezustand formschlüssig mit dem Kupplungselement zusammenwirkt. Die Sperrkante ist vorzugsweise so angeordnet, dass die Sperrkante im Betriebszustand von dem im Fluidkanal anliegenden Druck in Eingriff mit mindestens einer Kante des Kupplungselements gedrückt wird. Die Sperrkante ist folglich druckaktiviert. Die Sperrkante ist ferner derart am Befestigungselement angeordnet, dass die Sperrkante durch das Zusammenwirken mit einer Kante des Kupplungselements eine Aufweitung des Befestigungselements und damit ein unbeabsichtigtes Lösen des Befestigungselements, insbesondere im Betrieb, verhindert. Vorzugsweise sind an dem Befestigungselement mindestens zwei, vorzugsweise mindestens vier, Sperrkanten vorgesehen. Insbesondere sind die Sperrkanten an dem Befestigungselement gegenüberliegend angeordnet.

Als vorteilhaft hat sich zudem herausgestellt, wenn die Sperrkante an einem Ansatz des Befestigungselements vorgesehen ist, vorzugsweise angrenzend an eine Steuerfläche ausgebildet ist. Die Steuerkante erstreckt sich beispielsweise im Wesentlichen orthogonal zu einer Rastfläche. Eine Sperrkante weist beispielsweise eine Höhe zwischen 0,1 mm und 0,3 mm, bevorzugt 0,2 mm, auf. Die Höhe der Sperrkante entspricht vorzugsweise der Erstreckung parallel zur Mittelachse A der Anschlussöffnung.

Die Handhabung während der Montage der Anschlussvorrichtung wird gemäß einer weiteren Ausgestaltung dadurch vereinfacht, dass das Befestigungselement derart ausgebildet und eingerichtet ist, dass es bei jedem Erreichen der Ausgangsposition ein Rastgeräusch erzeugt. Durch das Rastgeräusch kann ein Monteur erkennen, dass ein in die Anschlussöffnung eingesetztes Einsatzteil ordnungsgemäß eingebaut ist. Das Rastgeräusch wird beispielsweise durch das Abgleiten von zwei Kanten oder durch das Anschlagen von zwei Flächen, insbesondere des Kupplungselements und des Befestigungselements, erzeugt.

Das Eindringen beispielsweise von Schmutz, Lack oder kleinen Fremdkörpern zwischen das Befestigungselement und das Kupplungselement wird gemäß einer weiteren Ausgestaltung dadurch verhindert, dass das Befestigungselement an mindestens einer Seite mindestens eine umlaufende Schmutzkante aufweist. Die Schmutzkante erstreckt sich über einen Grundkörper des Befestigungselements hinaus und überdeckt dabei im Montagezustand den Spalt zwischen Befestigungselement und Kupplungselement. Dadurch wird das Eindringen von Lack beim Lackieren oder von Schmutz verhindert. Vorzugsweise weist das Befestigungselement jeweils eine umlaufende Schmutzkante an den gegenüberliegenden Seiten auf, so dass beide Spalte zwischen Befestigungselement und Kupplungselement überdeckt werden.

Die Montage der Anschlussvorrichtung wird dadurch vereinfacht, dass das Kupplungselement mindestens ein Ausrichtungsanzeigemittel für das Einsatzteil aufweist. Das Einsatzteil weist mindestens ein korrespondierendes Ausrichtungsanzeigemittel auf, so dass ein Monteur erkennt, dass das Einsatzteil in einer Ausrichtung einbringbar ist, in der die beiden Ausrichtungsanzeigemittel aufeinander ausgerichtet sind. Vorzugsweise weisen das Kupplungselement und das Einsatzteil jeweils zwei Ausrichtungsanzeigemittel auf, so dass das Einsatzteil in zwei Ausrichtungen montierbar ist.

Die Ausrichtung eines in das Kupplungselement eingebrachten Verbindungssteckers lässt sich vorteilhaft gemäß einer weiteren Ausgestaltung dadurch festlegen, dass das Kupplungselement mindestens eine Verdrehsicherung aufweist, und dass die Verdrehsicherung formschlüssig mit dem Kupplungselement verrastbar ist. Das Kupplungselement wird dazu im Bereich einer Anschlussöffnung auf das Kupplungselement aufgesteckt und verrastet formschlüssig. Die formschlüssige Verrastung ist derart ausgebildet, dass diese auch ein Moment um die Mittelachse A übertragen kann. Der Verbindungsstecker wirkt mit der Verdrehsicherung formschlüssig zusammen, um seine rotative Ausrichtung festzulegen.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel einer Anschlussvorrichtung in perspektivischer Ansicht,
- Fig. 2: ein Ausführungsbeispiel einer Anschlussvorrichtung in Detailansicht,
- Fig. 3: ein Ausführungsbeispiel einer Anschlussvorrichtung in Draufsicht,
- Fig. 4a, 4b und 4c: ein Ausführungsbeispiel eines Befestigungselements in verschiedenen Ansichten,
- Fig. 5: ein Ausführungsbeispiel einer Anschlussvorrichtung in Detailansicht,
- Fig. 6: ein Ausführungsbeispiel einer Anschlussvorrichtung in teilweise geschnittener Ansicht,
- Fig. 7: ein Ausführungsbeispiel einer Anschlussvorrichtung in perspektivischer Ansicht,
- Fig. 8a und Fig. 8b: ein Ausführungsbeispiel eines Befestigungselements in verschiedenen Ansichten,
- Fig. 9: ein Ausführungsbeispiel einer Anschlussvorrichtung in geschnittener Ansicht, und
- Fig. 10: eine Vergrößerung des Ausschnittes B in Fig. 9.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist.

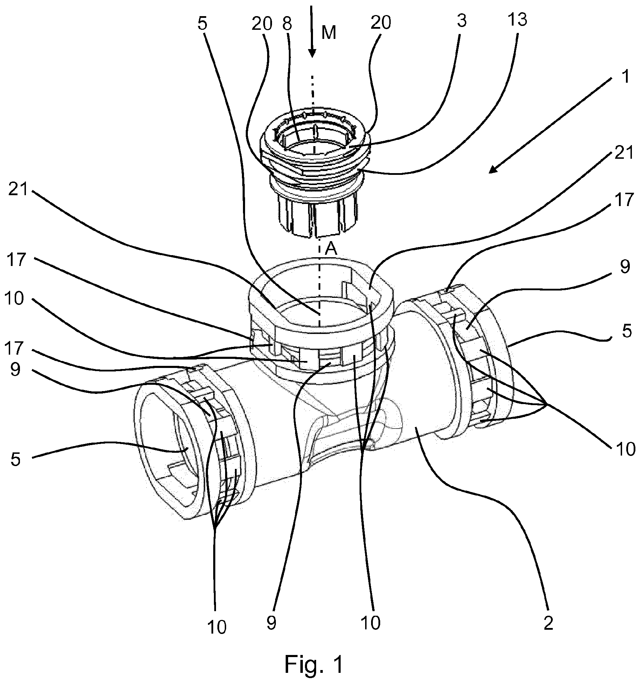

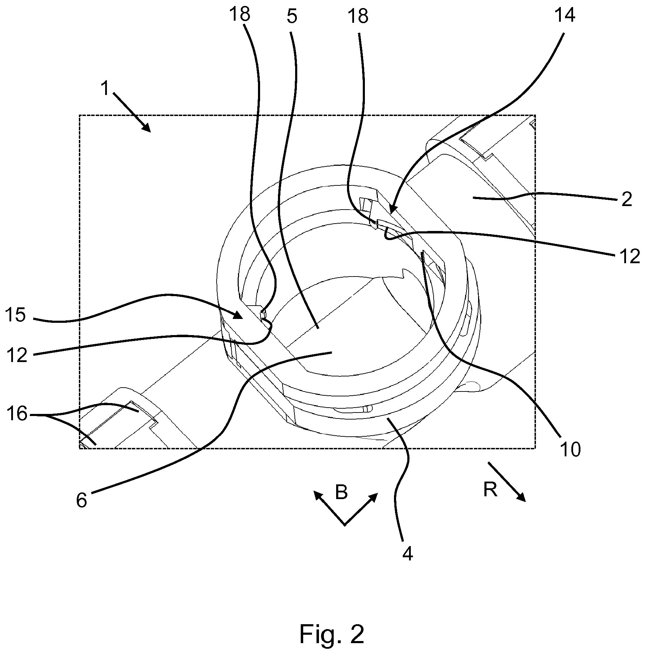

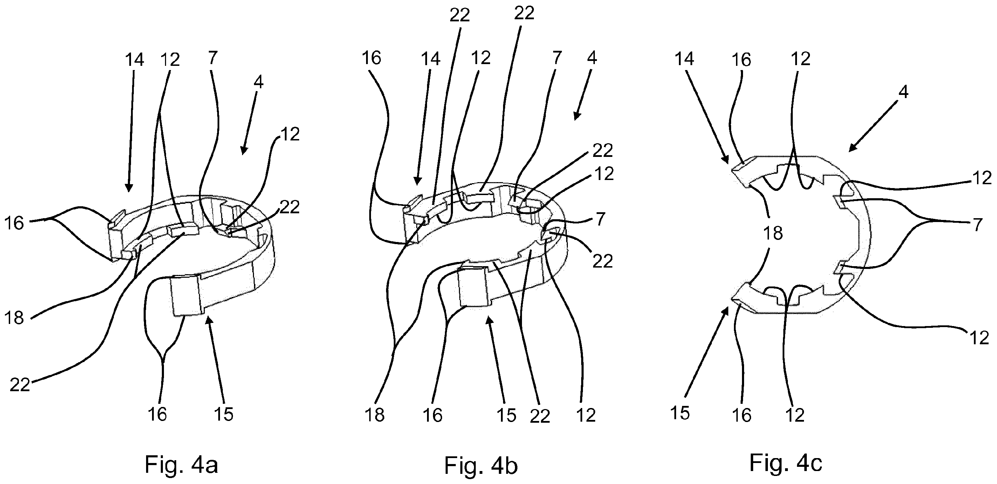

Fig. 1 zeigt ein Ausführungsbeispiel einer Anschlussvorrichtung 1 in perspektivischer Ansicht. Die Anschlussvorrichtung 1 weist mindestens ein Kupplungselement 2 auf, das bei diesem Ausführungsbeispiel als T-Verbinderstück ausgebildet ist. Die Anschlussvorrichtung 1 weist ferner mindestens ein Einsatzteil 3 sowie ein separat in den Fig. 4a bis 4c dargestelltes Befestigungselement 4 auf. Bei diesem Ausführungsbeispiel weist das Kupplungselement 2 drei Anschlussöffnungen 5 auf, die das Herstellen einer Verbindung zu einem beispielsweise in Fig. 2 gezeigten Fluidkanal 6 ermöglichen.

Das in Fig. 1 beispielhaft dargestellte Einsatzteil 3 ist in die Anschlussvorrichtung 1 einbringbar und mit dem in den Fig. 4a bis 4c dargestellten Befestigungselement 4 an dem Kupplungselement 2 befestigbar. Das Einsatzteil 3 stellt eine Verbindungsschnittstelle 8 für eine Medienleitung, beispielweise eine Aufnahme für einen - nicht dargestellten - Verbindungsstecker, bereit.

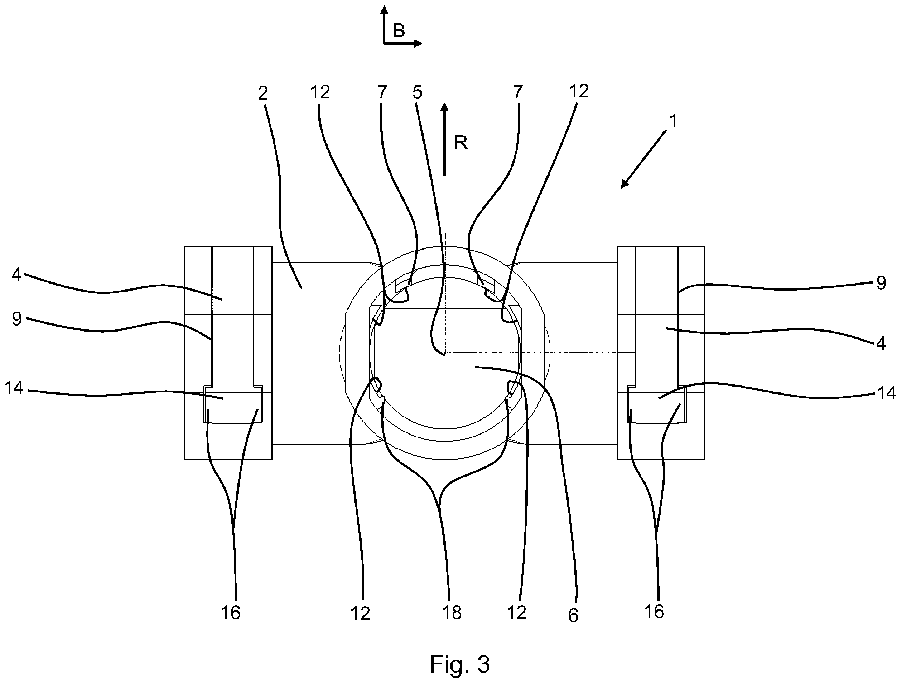

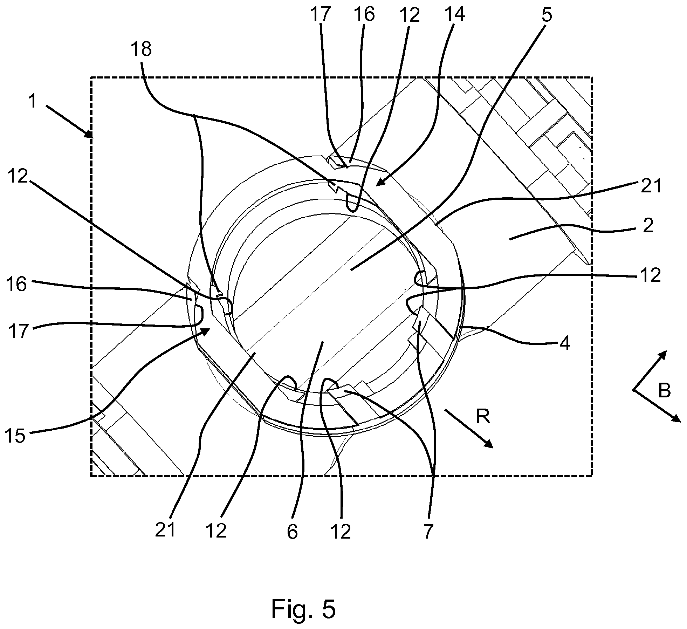

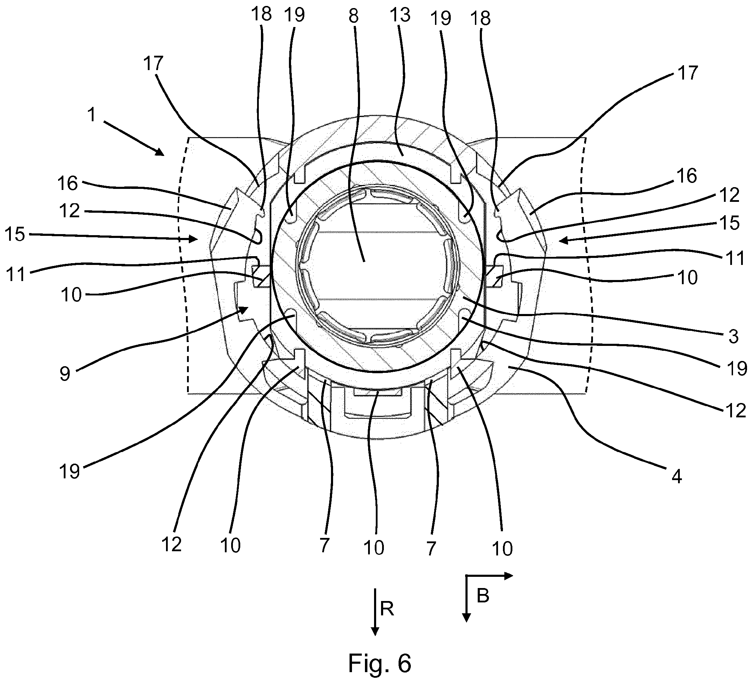

Das Befestigungselement 4 ist zwischen einer in den Fig. 3 und Fig. 5 dargestellten Ausgangsposition, in der bei eingebrachtem Einsatzteil 3 auch eine formschlüssige Verriegelung des Einsatzteils 3 erfolgt, und einer in den Fig. 2 und Fig. 6 dargestellten Zwischenposition, in der das Einsatzteil 3 tiefer in die Anschlussöffnung 5 eingebracht werden kann, bewegbar an dem Kupplungselement 2 gehalten. Das Befestigungselement 4 ist gemäß den Fig. 4a bis 4c als separates Bauteil ausgebildet und wird an dem Kupplungselement 2 bewegbar befestigt.

Gemäß den Fig. 4a bis 4c weist das Befestigungselement 4 zwei Steuerflächen 7 auf, die gemäß den Fig. 3, Fig. 5 und Fig. 6 im Montagezustand an dem Kupplungselement 2 mit dem Einsatzteil 3 zusammenwirkbar in der Anschlussöffnung 5 angeordnet sind.

Wird ein Einsatzteil 3 gemäß Fig. 1 unter Wirkung einer Montagekraft M parallel zur Mittelachse A der Anschlussöffnung 5 in die Anschlussöffnung 5 eingebracht, wirkt das Einsatzteil 3 bzw. die Montagekraft M derart auf die Steuerflächen 7 gemäß Fig. 3, Fig. 5 und Fig. 6, dass das Befestigungselement 4 aus der Ausgangsposition gemäß Fig. 3 und Fig. 5 in einer gedachten Bewegungsebene B in Richtung des Pfeiles R bewegt wird. Durch die Bewegung des Befestigungselements 4 aus der Ausgangsposition relativ zur Mittelachse A wird das Befestigungselement 4 zumindest teilweise elastisch verformt, wodurch eine der Bewegung entgegenwirkende Rückstellkraft hervorgerufen wird.

Bei ausreichender Montagekraft M kann das Einsatzteil 3 an den Steuerflächen 7 vorbeigleiten, so dass keine Kraft mehr auf die Steuerflächen 7 wirkt und das Befestigungselement 4 anschließend unter Wirkung der Rückstellkraft wieder in seine Ausgangsposition bewegt wird und mit dem Einsatzteil 3 formschlüssig verrasten kann. Bei nicht ausreichender Montagekraft M wird das Einsatzteil 3 unter Wirkung der Rückstellkraft durch die Steuerflächen 7 des Befestigungselements 4 zumindest teilweise wieder aus der Anschlussöffnung 5 entgegen der Montagerichtung herausgedrückt. Dadurch ist sichergestellt, dass eine Fehlmontage sofort erkannt wird.

Das Befestigungselement 4 ist gemäß Fig. 2, Fig. 5 und Fig. 6 in einer Ausnehmung 9 an dem Kupplungselement 2 geführt. In der Ausnehmung 9 sind fünf Stege 10 angeordnet, die die Ausnehmung 9 stabilisierend überbrücken und bei Druckbelastung ein Aufweiten der Ausnehmung 9 in einer Richtung parallel zur Mittelachse A der Anschlussöffnung 5 verhindern. Gemäß Fig. 6 ist mit den Seitenflächen 11 der Stege 10, die im Randbereich angeordnet sind, die Bewegung des Befestigungselements 4 in Richtung R begrenzbar.

Das Befestigungselement 4 weist gemäß den Fig. 2, Fig. 3, Fig. 4a, Fig. 4b, Fig. 4c, Fig. 5, Fig. 6, Fig. 8a und Fig. 8b sechs Rastflächen 12 auf, die in der Ausgangsposition gemäß Fig. 3 und Fig. 5 die Ausnehmung 9 durchgreifen und formschlüssig, insbesondere in einer Richtung parallel zur Mittelachse A der Anschlussöffnung 5, mit dem Einsatzteil 3 zusammenwirken, sofern ein Einsatzteil 3 in die Abschlussöffnung 5 in ausreichender Tiefe eingebracht ist. Die Rastflächen 12 wirken dabei gemäß Fig. 1, Fig. 6, Fig. 9 und Fig. 10 mit einem Befestigungskragen 13 am Einsatzteil 3 zusammen, indem sie den Befestigungskragen 13 an seiner Oberseite übergreifen. Die Rastflächen 12 und die Steuerflächen 7 sind jeweils an insgesamt sechs Ansätzen 22 an dem Befestigungselement 4 ausgebildet. Die Ansätze 22 erstrecken sich im Montagezustand im Wesentlichen radial in Richtung der Mittelachse A der Anschlussöffnung 5.

Gemäß Fig. 3, Fig. 5 und Fig. 6 umgreift das Befestigungselement 4 das Kupplungselement 2 und - sofern es vorhanden ist - das Einsatzteil 3 zumindest teilweise, so dass ein erster Endbereich 14 und ein zweiter Endbereich 15 - siehe auch Fig. 4a bis Fig. 4c - gegenüberliegend, insbesondere in Bezug auf die Mittelachse A, angeordnet sind.

Gemäß Fig. 4c, Fig. 6, Fig. 8a und Fig. 8b ist das Befestigungselement 4 in der Draufsicht mit einem im Wesentlichen C-förmigen Querschnitt ausgebildet. Gemäß Fig. 4a bis Fig. 4c, Fig. 5, Fig. 6, Fig. 8a und Fig. 8b sind im ersten Endbereich 14 und im zweiten Endbereich 15 jeweils zwei Führungsansätze 16 ausgebildet, die sich flächig in einer Richtung parallel zur Mittelachse A der Anschlussöffnung 5 nach oben und nach unten erstrecken. Bei einer Bewegung des Befestigungselementes 4 aus der Ausgangsposition in Richtung **R,** insbesondere in Richtung der Zwischenposition, gleiten die Führungsansätze 16 an korrespondierenden Führungsflächen 17 am Kupplungselement 2 nach außen, wodurch der erste Endbereich 14 und der zweite Endbereich 15 auseinandergespreizt werden und die Rückstellkraft hervorgerufen wird, die der Bewegung des Befestigungselements 4 in Richtung **R,** also entgegengesetzt zur Richtung **R,** entgegenwirkt.

Die Führungsflächen 17 sind beispielsweise auch in den Fig. 1 und Fig. 6 dargestellt. Die Führungsflächen 17 sind im Wesentlichen tangential zu einem gedachten Kreis um die Mittelachse A der Anschlussöffnung 5 ausgerichtet, siehe insbesondere Fig. 5 und Fig. 6, wobei über die konstruktive Änderung der Neigung der Führungsflächen 17 der Grad der Verformung, insbesondere Aufspreizung, des Befestigungselements 4 und damit die Rückstellkraft einstellbar ist. Es ist auch vorgesehen, dass die Führungsflächen 17 zumindest teilweise gewölbt sind.

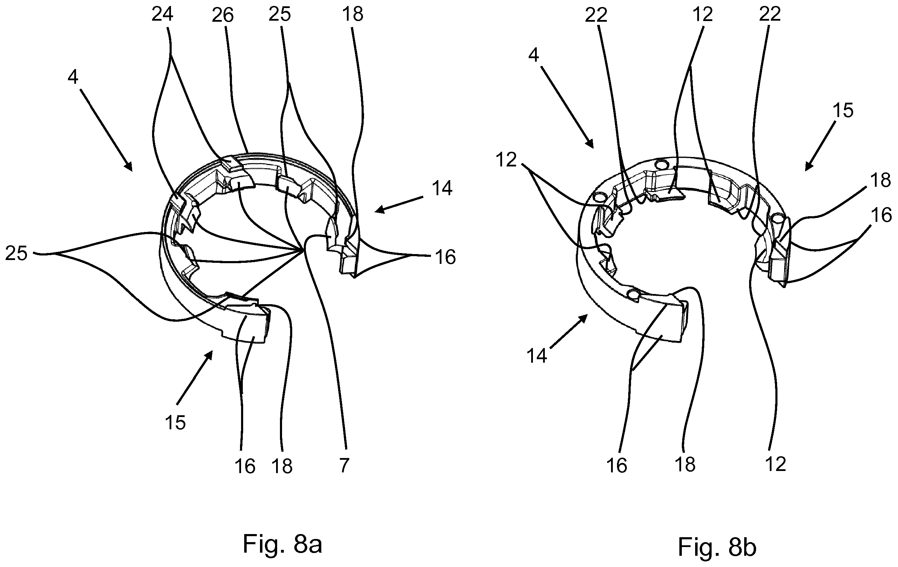

Insbesondere um das Einsatzteil 3 zusätzlich in der Anschlussöffnung 5 zu sichern, weist das Befestigungselement 4 gemäß Fig. 2, Fig. 3, Fig. 4a bis Fig. 4c, Fig. 5, Fig. 6, Fig. 8a und Fig. 8b in seinem ersten Endbereich 14 und in seinem zweiten Endbereich 15 jeweils einen Rastvorsprung 18 auf, die im Montagezustand in jeweils dafür vorgesehene Rastrücksprünge 19 - siehe beispielsweise Fig. 6 - am Einsatzteil 3 eingreifen. Durch das formschlüssige Eingreifen der Rastvorsprünge 18 in die Rastrücksprünge 19 wird das Einsatzteil 3 zusätzlich in der Anschlussöffnung 5 gesichert. Dadurch, dass der erste Endbereich 14 und der zweite Endbereich 15 bei einer Bewegung des Befestigungselements 4 aus der Ausgangsposition durch das Zusammenwirken der Führungsansätze 16 und der Führungsflächen 17 nach außen gespreizt werden, siehe beispielsweise Fig. 5 und Fig. 6, werden die Rastvorsprünge 18 im Wesentlichen in einer radialen Richtung auf die Mittelachse A der Anschlussöffnung 5 zu und von dieser weg bewegt. Gemäß dem Ausführungsbeispiel der Fig. 8a und Fig. 8b sind die Rastvorsprünge 18 an den Führungsansätzen 16 ausgebildet.

Das Einsatzteil 3 weist gemäß Fig. 1 an zwei gegenüberliegenden Seiten jeweils eine Abflachung 20 auf, die korrespondierend zu Abflachungen 21 am Innenumfang der Anschlussöffnung 5 ausgebildet sind - siehe beispielsweise Fig. 1, Fig. 2, Fig. 3 und Fig. 5. Das Einsatzteil 3 ist dadurch in zwei zu 180° zueinander versetzt angeordneten Ausrichtungen in die Anschlussöffnung 5 einbringbar.

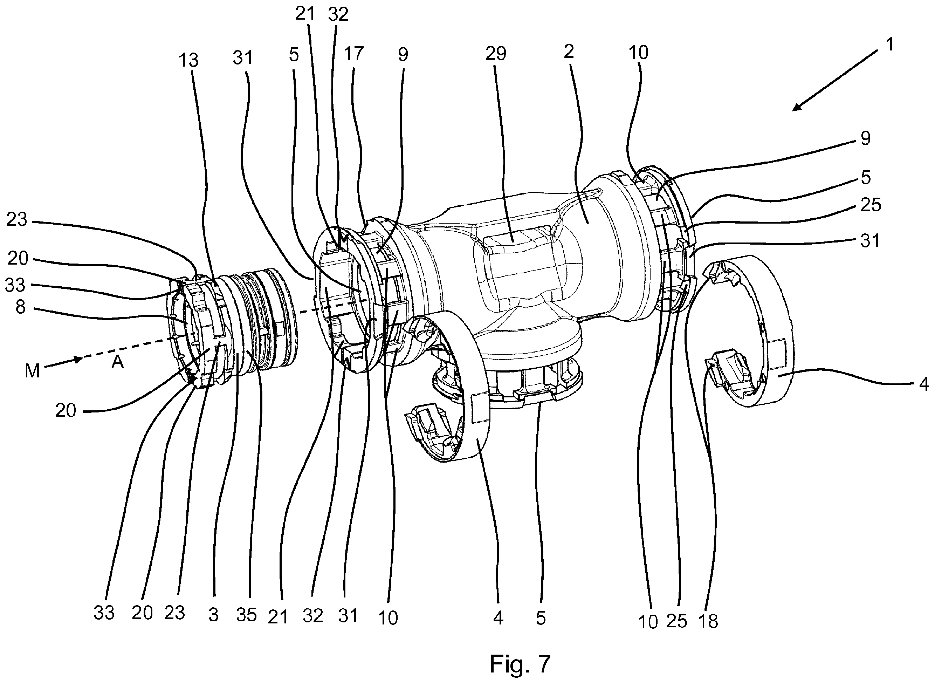

Fig. 7 zeigt ein Ausführungsbeispiel einer Anschlussvorrichtung 1 in perspektivischer Ansicht. Die Anschlussvorrichtung 1 weist mindestens ein Kupplungselement 2 auf, das bei diesem Ausführungsbeispiel als T-Verbinderstück mit drei Anschlussöffnungen 5 ausgebildet ist. Die Anschlussvorrichtung 1 weist ferner mindestens ein Einsatzteil 3 sowie zwei beispielhaft in Fig. 7 im nicht montierten Zustand dargestellte Befestigungselemente 4 auf. Ein entsprechendes Befestigungselement 4 ist ebenfalls in den Fig. 8a und Fig. 8b separat dargestellt und wird in diesem Zusammenhang näher beschrieben.

Das in Fig. 7 beispielhaft dargestellte Einsatzteil 3 ist in die Anschlussvorrichtung 1 einbringbar und mit dem dargestellten bzw. in den Fig. 8a und Fig. 8b dargestellten Befestigungselement 4 an dem Kupplungselement 2 befestigbar. Das Einsatzteil 3 stellt eine Verbindungsschnittstelle 8 für eine Medienleitung, beispielweise eine Aufnahme für einen - nicht dargestellten - Verbindungsstecker, bereit. Die Anschlussöffnungen 5 weisen bei diesem Ausführungsbeispiel vier Abflachungen 21 auf, die mit korrespondierenden Abflachungen 20 an dem Einsatzteil 3 zusammenwirken und das Einsatzteil 3 im Montagezustand kipp- und rotationssicher in der Anschlussöffnung 5 halten.

Die Befestigungselemente 4 gemäß Fig. 7 sind - wie zuvor für die Fig. 3 und Fig. 5 beschrieben - im Montagezustand bewegbar gehalten, um mit dem Einsatzteil 3 zusammenzuwirken. Die Rastflächen 12 der Befestigungselemente 4 wirken formschlüssig mit einem Befestigungskragen 13 am Einsatzteil 3 zusammen. Aus Führungs- und Stabilitätsgründen sind am Befestigungskragen vier Stege 23 über den Umfang verteilt angeordnet. Die Stege 23 sind im Bereich der Abflachungen 20 angeordnet.

Das Befestigungsmittel 4 gemäß dem Ausführungsbeispiel der Fig. 8a und Fig. 8b weist insgesamt sechs Ansätze 22 auf, an denen auf der einen Seite eine Steuerfläche 7 und auf der anderen Seite eine Rastfläche 12 angeordnet ist. Gemäß Fig. 8a weist das Befestigungselement 4 zwei Führungsvorsprünge 24 auf, die der Führung der Bewegung des Befestigungselements 4 relativ zum Kupplungselement 2 dienen und in entsprechenden Führungsausnehmungen 25 - gemäß Fig. 7 - am Kupplungselement 2 geführt werden.

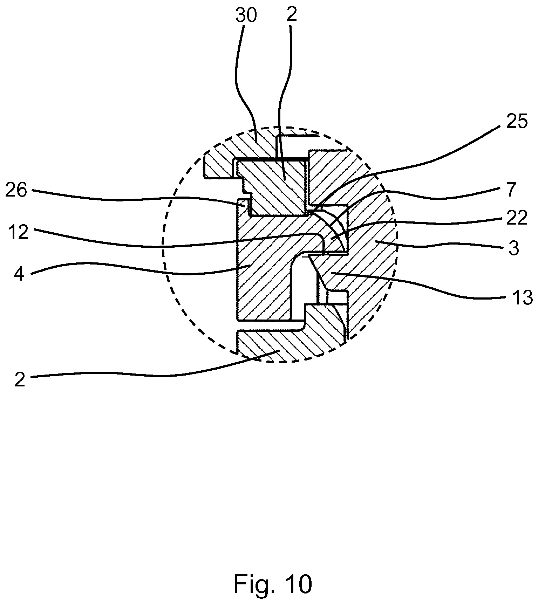

Bei dem Ausführungsbeispiel der Fig. 8a und Fig. 8b weist das Befestigungselement 4 insgesamt vier Sperrkanten 25 auf, die in den Bereichen des Befestigungselements 4 angeordnet sind, die bei einer Bewegung aus der Ausgangsposition nach außen ausfedern. Die Sperrkanten 25 sind insbesondere angrenzend an die jeweiligen Steuerflächen 7 ausgebildet. Die Funktion der Sperrkanten 25 wird näher zu Fig. 10 beschrieben.

Das Befestigungselement 4 weist gemäß Fig. 8a eine Schutzkante 26 auf, die sich umlaufend zwischen den beiden Führungsansätzen 16 erstreckt. Die Schutzkante 26 verhindert im Montagezustand das Eindringen von Schmutz oder Lack in den Spalt zwischen Befestigungselement 4 und Kupplungselement 2 und stellt damit auch eine Bewegbarkeit des Befestigungselements 4 sicher.

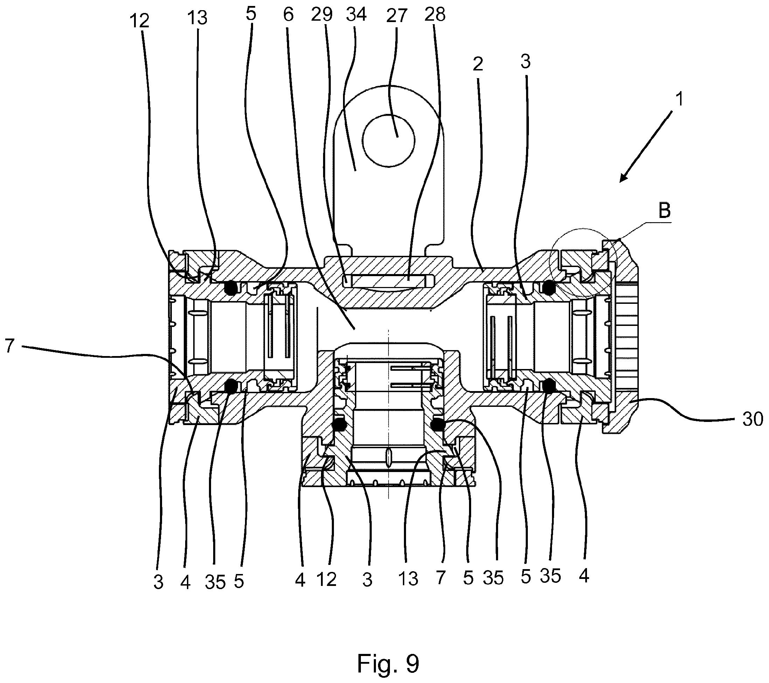

Fig. 9 zeigt ein Ausführungsbeispiel eines Kupplungselements 2 gemäß Fig. 7 mit drei montierten Einsatzteilen 3 in den drei Anschlussöffnungen 5. Das Kupplungselement 2 weist ein Haltelement 34 auf, das als Winkel aus Metall ausgebildet ist und eine Montageöffnung 27 aufweist. Das Halteelement 34 ist mit einem Schenkel 28 in eine Ausnehmung 29 am Kupplungselement 2 eingeführt und dient der Befestigung des Kupplungselements 2. Die Einsatzteile 3 werden durch die in ihrer jeweiligen Ausgangsposition befindlichen Befestigungselemente 4 gehalten. Die Rastflächen 12 wirken dabei formschlüssig mit dem Befestigungskragen 13 des jeweiligen Einsatzteils 3 zusammen. Die Einsatzteile 3 gemäß Fig. 9 weisen jeweils eine einzige Dichtung 35 auf, die im Montagezustand dichtend in der Anschlussöffnung 5 anliegt.

Fig. 10 zeigt eine Vergrößerung im Bereich B gemäß Fig. 9. Das Einsatzteil 3 wird durch das Zusammenwirken von Befestigungskragen 13 und Rastflächen 12 des Befestigungselements 4 in der Anschlussöffnung 5 des Kupplungselements 2 gehalten. Im Betriebszustand wird das Einsatzteil 3 durch den anliegenden Druck in Richtung aus der Anschlussöffnung 5 herausgedrückt - gemäß Fig. 10 nach oben. Das Befestigungselement 4 wirkt dem entgegen. Dadurch wird die Sperrkante 25 des Befestigungselements 4 in Eingriff mit dem Kupplungselement gedrückt. Dadurch verhindert die Sperrkante 25, dass das Befestigungselement 4 seitlich - gemäß Fig. 10 nach links - ausweichen kann, wodurch die Betriebssicherheit gesteigert wird. Die Sperrkanten 25 verhindern ein ungewolltes Aufspreizen des Befestigungselements 4. Ferner ist außenseitig die Schutzkante 26 ausgebildet, die ein Eindringen von Schmutz zwischen das Befestigungselement 4 und das Kupplungselement 2 verhindert. Durch das Vorhandensein der Schutzkante 26 ist sichergestellt, dass die Sperrkante 25 auf der Innenseite wirken kann, da das Befestigungselement 4 störungsfrei von Fremdkörpern an dem Kupplungselement 2 anliegen kann und die Sperrkante 25 damit ihre Sperrwirkung erzielt.

Gemäß Fig. 9 und Fig. 10 ist im Bereich einer Anschlussöffnung 5 eine Verdrehsicherung 30 montiert, die eine rotative Ausrichtung und Festlegung eines - nicht dargestellten - Verbindungssteckers ermöglicht. Die Verdrehsicherung 30 ist formschlüssig mit dem Kupplungselement 2 verrastet. Zudem wirkt die Verdrehsicherung 30 mit Rücksprüngen 31 am Kupplungselement 2 zusammen, um ein Moment um die Mittelachse A übertragen zu können.

Gemäß Fig. 7 sind im Randbereich der Anschlussöffnung 5 gegenüberliegend auf dem Umfang zwei Ausrichtungsanzeigemittel 32 angeordnet. Ein Einsatzteil ist dann zum Einbringen in die Anschlussöffnung 5 ausgerichtet, wenn die Ausrichtungsanzeigemittel 32 des Kupplungselement 2 mit korrespondierenden Ausrichtungsanzeigemitteln 33 am Einsatzteil 3 fluchten.

Das Kupplungselement 2 ist gemäß Fig. 1, Fig. 3, Fig. 7 und Fig. 9 hier beispielhaft als im Wesentlichen T-förmiges Verbinderstück mit drei Anschlussöffnungen 5 zum Einbringen von drei Einsatzteilen 3 ausgebildet. Andere Ausgestaltungen, beispielsweise gerade oder L-förmige Verbinderstücke, sind ebenfalls vorgesehen. Ferner ist auch eine Ausgestaltung des Kupplungselements als plattenförmiger Verbinder, insbesondere gemäß der Offenbarung der DE 10 2017 106 676, auf die hiermit ausdrücklich Bezug genommen wird.

### Bezugszeichenliste

- 1: Anschlussvorrichtung
- 2: Kupplungselement
- 3: Einsatzteil
- 4: Befestigungselement
- 5: Anschlussöffnungen
- 6: Fluidkanal
- 7: Steuerflächen
- 8: Verbindungschnittstelle
- 9: Ausnehmung
- 10: Stege
- 11: Seitenflächen
- 12: Rastflächen
- 13: Befestigungskragen
- 14: Erster Endbereich
- 15: Zweiter Endbereich
- 16: Führungsansätze
- 17: Führungsflächen
- 18: Rastvorsprünge
- 19: Rastrücksprünge
- 20: Abflachung
- 21: Abflachung
- 22: Ansätze
- 23: Stege
- 24: Führungsvorsprünge
- 25: Sperrkante
- 26: Schutzkante
- 27: Montageöffnung
- 28: Schenkel
- 29: Ausnehmung
- 30: Verdrehsicherung
- 31: Rücksprung
- 32: Ausrichtungsanzeigemittel des Kupplungselements 2
- 33: Ausrichtungsanzeigemittel des Einsatzteils 3
- 34: Halteelement
- 35: Dichtung

- A: Mittelachse
- B: Bewegungsebene
- M: Montagekraft
- R: Richtung

## Patentansprüche

1. Anschlussvorrichtung (1) für Medienleitungen, mit mindestens einem Kupplungselement (2), mindestens einem Einsatzteil (3) und mindestens einem Befestigungselement (4), wobei das Kupplungselement (2) mindestens eine Anschlussöffnung (5) und mindestens einen Fluidkanal (6) aufweist, wobei das Einsatzteil (3) zumindest teilweise in die Anschlussöffnung (5) einbringbar ist, und wobei das Einsatzteil (3) mit dem Befestigungselement (4) an dem Kupplungselement (2) befestigbar ist, wobei das Befestigungselement (4) bewegbar an dem Kupplungselement (2) gehalten ist, wobei das Befestigungselement (4) mindestens zwei Steuerflächen (7) aufweist, wobei beim Einbringen des Einsatzteils (3) in die Anschlussöffnung (5) unter Wirkung einer Montagekraft das Einsatzteil (3) derart auf die Steuerflächen (7) wirkt, dass das Befestigungselement (4) aus einer Ausgangsposition entgegen einer Rückstellkraft bewegt wird, wobei die Rückstellkraft durch eine zumindest teilweise elastische Verformung des Befestigungselements (4) bewirkt wird, und wobei bei ausreichender Montagekraft das Einsatzteil (3) an den Steuerflächen (7) vorbeigleitet, so dass das Befestigungselement (4) durch die Wirkung der Rückstellkraft wieder in die Ausgangsposition bewegt wird und mit dem Einsatzteil (3) formschlüssig verrastet,
wobei bei nicht ausreichender Montagekraft das Befestigungselement (4) unter Wirkung der Rückstellkraft wieder in die Ausgangsposition bewegt wird und das Einsatzteil (3) mittels der Steuerflächen (7) zumindest teilweise wieder aus der Anschlussöffnung (5) herausgedrückt wird, wobei das Einsatzteil (3) eine Verbindungsschnittstelle (8) für eine Medienleitung bereitstellt, wobei das Befestigungselement (4) in mindestens einer Ausnehmung (9) an dem Kupplungselement (2) geführt ist, wobei die Ausnehmung (9) mindestens einen Steg (10) aufweist, wobei der Steg (10) die Ausnehmung (9) stabilisierend übergreift, wobei das Befestigungselement (4) mindestens vier Rastflächen (12) aufweist, die im verrasteten Montagezustand formschlüssig mit dem Einsatzteil (3) zusammenwirken, und wobei die Steuerflächen (7) eine Neigung zwischen 30° und 50° zu einer Bewegungsebene (B) des Befestigungselements (4) aufweisen oder konvex oder konkav gewölbt sind.

2. Anschlussvorrichtung (1) nach Anspruch 1,
**dadurch gekennzeichnet, dass**
das Befestigungselement (4) zwischen zwei und fünf Stege (10), aufweist, insbesondere dass mindestens ein Steg (10) die Bewegung des Befestigungselements (4) begrenzt.

3. Anschlussvorrichtung (1) nach Anspruch 1 oder 2,
**dadurch gekennzeichnet, dass**
das Befestigungselement (4) mindestens sechs Rastflächen (12) aufweist, die im verrasteten Montagezustand formschlüssig mit dem Einsatzteil (3), insbesondere mit einem Befestigungskragen (13) am Einsatzteil (3), zusammenwirken.

4. Anschlussvorrichtung (1) nach Anspruch 3,
**dadurch gekennzeichnet, dass**
mindestens eine Rastfläche (12) an einem Ansatz (22) des Befestigungselements (4) ausgebildet ist, und dass an dem Ansatz (22) auch mindestens eine Steuerfläche (7) ausgebildet ist, insbesondere angrenzend an die Rastfläche (12) mindestens eine Steuerfläche (7) ausgebildet ist.

5. Anschlussvorrichtung (1) nach einem der Ansprüche 1 bis 4,
**dadurch gekennzeichnet, dass**
das Befestigungselement (4) das Kupplungselement (2) zumindest teilweise umgreift, so dass ein erster Endbereich (14) und ein zweiter Endbereich (15) des Befestigungselements (4) gegenüberliegend angeordnet sind, insbesondere dass das Befestigungselement (4) in der Draufsicht einen im Wesentlichen C-förmigen Querschnitt aufweist.

6. Anschlussvorrichtung (1) nach Anspruch 5,
**dadurch gekennzeichnet, dass**
im ersten Endbereich (14) und/oder im zweiten Endbereich (15) des Befestigungselements (4) mindestens ein Führungsansatz (16) ausgebildet ist, insbesondere mindestens zwei Führungsansätze (16) ausgebildet sind, und dass der Führungsansatz (16) bei einer Bewegung aus der Ausgangsposition an mindestens einer korrespondierenden Führungsfläche (17), insbesondere mindestens zwei Führungsflächen (17), des Kupplungselements (2) entlanggleitet, insbesondere um das Befestigungselement (4) elastisch zu verformen, insbesondere dass die Führungsfläche (17) tangential zu einem gedachten Kreis um die Mittelachse (A) der Anschlussöffnung (5) ausgerichtet ist.

7. Anschlussvorrichtung (1) nach Anspruch 6,
**dadurch gekennzeichnet, dass**
die mit dem ersten Endbereich (14) und mit dem zweiten Endbereich (15) zusammenwirkenden Führungsflächen (17) entgegengesetzt zueinander geneigt sind.

8. Anschlussvorrichtung (1) nach einem der Ansprüche 1 bis 7,
**dadurch gekennzeichnet, dass**
die Rückstellkraft über die Wahl des Materials des Befestigungselements (4) und/oder die Ausrichtung der Führungsansätze (16) und der Führungsflächen (17) eingestellt ist.

9. Anschlussvorrichtung (1) nach einem der Ansprüche 1 bis 8,
**dadurch gekennzeichnet, dass**
das Befestigungselement (4), insbesondere mindestens in dem ersten Endbereich (14) oder mindestens dem zweiten Endbereich (15), mindestens einen Rastvorsprung (18), insbesondere zwei Rastvorsprünge (18), aufweist, und dass der Rastvorsprung (18) im Montagezustand in einen Rastrücksprung (19) am Einsatzteil (3) eingreift, insbesondere dass der Rastvorsprung (18) in radialer Richtung auf die Mittelachse (A) bewegbar ist.

10. Anschlussvorrichtung (1) nach einem der Ansprüche 1 bis 9,
**dadurch gekennzeichnet, dass**
dass das Einsatzteil (3) mindestens eine Abflachung (20), insbesondere mindestens zwei oder vier gegenüberliegend angeordnete Abflachungen (20) aufweist, und dass die Anschlussöffnung (5) mindestens eine korrespondierende Abflachung (21) am Innenumfang, insbesondere mindestens zwei oder vier gegenüberliegend angeordnete Abflachungen (21) aufweist.

11. Anschlussvorrichtung (1) nach einem der Ansprüche 1 bis 10,
**dadurch gekennzeichnet, dass**
das Befestigungselement (4) mindestens eine Sperrkante (25) aufweist, insbesondere dass die Sperrkante (25) im Montagezustand formschlüssig mit dem Kupplungselement (2) zusammenwirkt, vorzugsweise dass die Sperrkante (25) eine Höhe zwischen 0,1 mm und 0,3 mm, bevorzugt 0,2 mm, aufweist.

12. Anschlussvorrichtung (1) nach einem der Ansprüche 1 bis 11,
**dadurch gekennzeichnet, dass**
das Befestigungselement (4) beim Erreichen der Ausgangsposition ein Rastgeräusch erzeugt.

13. Anschlussvorrichtung (1) nach einem der Ansprüche 1 bis 12,
**dadurch gekennzeichnet, dass**
das Befestigungselement (4) an mindestens einer Seite mindestens eine umlaufende Schutzkante (26) aufweist, vorzugsweise dass das Befestigungselement (4) an zwei Seiten mindestens eine umlaufende Schutzkante (26) aufweist.

14. Anschlussvorrichtung (1) nach einem der Ansprüche 1 bis 13,
**dadurch gekennzeichnet, dass**
das Kupplungselement (2) mindestens ein Ausrichtungsanzeigemittel (32), vorzugsweise zwei Ausrichtungsanzeigemittel (32), für das Einsatzteil (3) aufweist, vorzugsweise dass das Einsatzteil (3) mindestens ein mit dem Ausrichtungsanzeigemittel (32) des Befestigungselements (4) korrespondierendes Ausrichtungsanzeigemittel (33), vorzugsweise zwei korrespondierende Ausrichtungsanzeigemittel (33), aufweist.

15. Anschlussvorrichtung (1) nach einem der Ansprüche 1 bis 11,
**dadurch gekennzeichnet, dass**
mindestens eine Verdrehsicherung (30) vorhanden ist, und dass die Verdrehsicherung (30) formschlüssig mit dem Kupplungselement (2) verrastbar ist.

## Claims

1. Connecting device (1) for media lines, with at least one coupling element (2), at least one insertion part (3) and at least one attachment element (4), wherein the coupling element (2) has at least one connection opening (5) and at least one fluid channel (6), wherein the insertion part (3) can be inserted at least partly into the connection opening (5), and wherein the insertion part (3) can be secured to the coupling element (2) with the attachment element (4), wherein the attachment element (4) is movably held on the coupling element (2), wherein the attachment element (4) features at least two control surfaces (7), wherein upon insertion of the insertion part (3) into the connection opening (5) under the effect of an assembly force, the insertion part (3) acts upon the control surfaces (7) such that the attachment element (4) is moved from an initial position against a restoring force, wherein the restoring force is effected by an at least partial elastic deformation of the attachment element (4), and wherein with sufficient assembly force, the insertion part (3) slides past the control surfaces (7) so that the attachment element (4) is moved back into the starting position due to the effect of the restoring force and snaps in an form-fitting manner with the insertion part (3),
wherein when the assembly force is not sufficient, the attachment element (4) is moved under the effect of the restoring force back into the initial position and the insertion part (3) is pressed at least partly out from the connection opening (5) by means of the control surfaces (7), wherein the insertion part (3) provides a connecting interface (8) for a media line, wherein the attachment element (4) is guided in at least one recess (9) on the coupling element (2), wherein the recess (9) has at least one web (10), wherein the web (10) overlaps and stabilizes the recess (9), wherein the attachment element (4) has at least four snap-in surfaces (12), which in the snapped-in assembly state interact in an form-fitting manner with the insertion part (3), and wherein the control surfaces (7) feature an inclination of between 30° and 50° to a plane of motion (B) of the attachment element (4) or the control surfaces (7) are arched convex or concave.

2. Connecting device (1) according to claim 1,
**characterized in that**
the attachment element (4) features between two and five webs (10), in particular that at least one web (10) limits the movement of the attachment element (4).

3. Connecting device (1) according to claim 1 or 2,
**characterized in that**
the attachment element (4) features at least six snap-in surfaces (12), which in the snapped-in assembly state interact in an form-fitting manner with the insertion part (3), in particular with an attachment collar (13) on the insertion part (3).

4. Connecting device (1) according to claim 3,
**characterized in that**
at least one snap-in surface (12) is formed on a lug (22) of the attachment element (4), and that also at least one control surface (7) is formed on the lug (22), in particular at least one control surface (7) is formed adjoining the snap-in surface (12).

5. Connecting device (1) according to one of claims 1 to 4,
**characterized in that**
the attachment element (4) at least partly overlaps the coupling element (2) so that a first end region (14) and a second end region (15) of the attachment element (4) are disposed opposite each other, in particular that the attachment element (4) in a top view features an essentially C-shaped cross section.

6. Connecting device (1) according to claim 5,
**characterized in that**
in the first end region (14) and/or in the second end region (15) of the attachment element (4), at least one guide lug (16) is formed, in particular at least two guide lugs (16) are formed, and that during a movement from the initial position the guide lug (16) slides along at least one corresponding guide surface (17), in particular along at least two guide surfaces (17), of the coupling element (2), in particular so as to deform the attachment element (4) elastically, in particular that the guide surface (17) is aligned tangential to a notional circle around the middle axis (A) of the connection opening (5).

7. Connecting device (1) according claim 6,
**characterized in that**
the guide surfaces (17) cooperating with the first end region (14) and with the second end region (15) are inclined oppositely to each other.

8. Connecting device (1) according to one of claims 1 to 7,
**characterized in that**
the restoring force is adjusted by means of the selection of the material of the attachment element (4) and/or by the alignment of the guide lugs (16) and the guide surfaces (17).

9. Connecting device (1) according to one of claims 1 to 8,
**characterized in that**
the attachment element (4), in particular at least in its first end region (14) or at least in its second end region (15), features at least one snap-in protrusion (18), in particular two snap-in protrusions (18), and that the snap-in protrusion (18) in the assembled state engages in a snap-in setback (19) at the insertion part (3), in particular that the snap-in protrusion (18) can move in a radial direction towards the middle axis (A).

10. Connecting device (1) according to one of claims 1 to 9,
**characterized in that**
the insertion part (3) features at least one flat section (20), in particular at least two or four oppositely arranged flat sections (20), and that the connection opening (5) features at least one corresponding flat section (21) at the inner perimeter, in particular at least two or four oppositely arranged flat sections (21).

11. Connecting device (1) according to one of claims 1 to 10,
**characterized in that**
the attachment element (4) features at least one blocking edge (25), in particular that the blocking edge (25) in the assembled state cooperates in a form-fitting manner with the coupling element (2), preferably that the blocking edge (25) features a height of between 0.1 mm and 0.3 mm, preferably 0.2 mm.

12. Connecting device (1) according to one of claims 1 to 11,
**characterized in that**
the attachment element (4) produces a snap-in noise upon reaching the starting position.

13. Connecting device (1) according to one of claims 1 to 12,
**characterized in that**
the attachment element (4) features on at least one side, at least one circumferential guard edge (26), preferably that the attachment element (4) features at least one circumferential guard edge (26) on two sides.

14. Connecting device (1) according to one of claims 1 to 13,
**characterized in that**
the coupling element (2) features at least one alignment indicator (32), preferably two alignment indicators (32), for the insertion part (3), preferably that the insertion part (3) features at least one alignment indicator (33) corresponding to the alignment indicator (32) of the attachment element (4), preferably features two corresponding alignment indicators (33).

15. Connecting device (1) according to one of claims 1 to 11,
**characterized in that**
at least one rotation lock (30) is present, and that the rotation lock (30) can snap into the coupling element (2) in a form-fitting manner.

## Revendications

1. Dispositif de raccordement (1) pour conduites de fluides, avec au moins un élément d'accouplement (2), au moins une pièce d'insertion (3) et au moins un élément de fixation (4), l'élément d'accouplement (2) présentant au moins une ouverture de raccordement (5) et au moins un canal de fluide (6), la pièce d'insertion (3) peut être introduite au moins partiellement dans l'ouverture de raccordement (5), et la pièce d'insertion (3) peut être fixée à l'élément d'accouplement (2) avec l'élément de fixation (4), dans lequel l'élément de fixation (4) est maintenu de manière mobile á l'élément d'accouplement (2), l'élément de fixation (4) présentant au moins deux surfaces de commande (7), dans lequel, lors de l'introduction de la pièce d'insertion (3) dans l'ouverture de raccordement (5) sous l'effet d'une force de montage, la pièce d'insertion (3) agit sur les surfaces de commande (7) de telle sorte que l'élément de fixation (4) est déplacé d'une position initiale à l'encontre d'une force de rappel, la force de rappel étant provoquée par une déformation au moins partiellement élastique de l'élément de fixation (4), et dans lequel la pièce d'insertion (3) glisse le long les surfaces de commande (7) lorsque la force de montage est suffisante, de sorte que l'élément de fixation (4) est à nouveau ramené dans la position initiale sous l'effet de la force de rappel et s'enlenche par complémentarité de forme avec la pièce d'insertion (3), lorsque la force de montage n'est pas suffisante, l'élément de fixation (4) est ramené dans la position initiale sous l'effet de la force de rappel et l'élément de fixation (4) est pressé au moins partiellement hors de l'ouverture de raccordement (5) au moyen des surfaces de commandes (7), la pièce d'insertion (3) présente une interface de raccordement (8) pour une conduit de fluide, l'élément de fixation (4) est guidé dans au moins un évidement (9) de l'élément d'accouplement (2), l'évidement (9) présente au moins une nervure (10), la nervure s'accroche à l'évidement (9) pour le stabiliser, l'élément de fixation (4) présente au moins quatre surfaces d'encliquetage (12) qui, à l'état assemble encliqueté, coopèrent par complémentarité de forme avec la pièce d'insertion (3), et les surfaces de commande (7) ont une inclinaison comprise entre 30° et 50° par rapport à un plan de déplacement (B) de l'élément de fixation (4) ou sont convexe ou concaves.

2. Dispositif de raccordement (1) selon la revendication 1,
**caractérisé en ce que**
l'élément de fixation (4) présente entre deux et cinq entretoises (10), en particulier qu'au moins une entretoise (10) limite le mouvement de l'élément de fixation (4).

3. Dispositif de raccordement (1) selon la revendication 1 ou 2,
**caractérisé en ce que**
l'élément de fixation (4) présente au moins six surfaces d'encliquetage (12) qui, à l'état de montage encliqueté, coopèrent par complémentarité de forme avec la pièce d'insertion (3), en particulier avec une collerette de fixation (13) sur la pièce d'insertion (3).

4. Dispositif de raccordement (1) selon la revendication 3,
**caractérisé en ce que**
au moins une surface d'encliquetage (12) est formée sur un appendice (22) de l'élément de fixation (4), et **en ce qu'**au moins une surface de commande (7) est également formée sur l'appendice (22), en particulier au moins une surface de commande (7) est formée adjacente à la surface d'encliquetage (12).

5. Dispositif de raccordement (1) selon l'une quelconque des revendications 1 à 4,
**caractérisé en ce que**
l'élément de fixation (4) entoure au moins partiellement l'élément d'accouplement (2), de sorte qu'une première zone d'extrémité (14) et une deuxième zone d'extrémité (15) de l'élément de fixation (4) sont disposées en vis-à-vis, en particulier **en ce que** l'élément de fixation (4) présente, en vue de dessus, une section transversale essentiellement en forme de C.

6. Dispositif de raccordement (1) selon la revendication 5,
**caractérisé en ce que**
dans la première zone d'extrémité (14) et/ou dans la deuxième zone d'extrémité (15) de l'élément de fixation (4), au moins un épaulement de guidage (16) est formé, en particulier au moins deux épaulements de guidage (16) sont formés, et **en ce que** l'épaulement de guidage (16), lors d'un mouvement à partir de la position initiale, glisse le long d'une surface de guidage (17) correspondante, en particulier au moins deux surfaces de guidage (17), de l'élément d'accouplement (2), en particulier pour déformer élastiquement l'élément de fixation (4), en particulier que la surface de guidage (17) orientée tangentiellement à un cercle imaginaire autour de l'axe central (A) de l'ouverture de raccordement (5).

7. Dispositif de raccordement (1) selon la revendication 6,
**caractérisé en ce que**
les surfaces de guidage (17) coopérant avec la première partie d'extrémité (14) et avec la deuxième partie d'extrémité (15) sont inclinées opposées les unes aux autres.

8. Dispositif de raccordement (1) selon l'une quelconque des revendications 1 à 7,
**caractérisé en ce que**
la force de rappel est réglée par le choix du matériau de l'élément de fixation (4) et/ou l'orientation des appendices de guidage (16) et des surfaces de guidage (17).

9. Dispositif de raccordement (1) selon l'une quelconque des revendications 1 à 8,
**caractérisé en ce que**
l'élément de fixation (4) présente, en particulier au moins dans la première zone d'extrémité (14) ou au moins dans la deuxième zone d'extrémité (15), au moins une saillie d'encliquetage (18), en particulier deux saillies d'encliquetage (18), et **en ce que** la saillie d'encliquetage (18), à l'état de montage, s'engage dans un retrait d'arrêt (19) sur la pièce d'insertion (3) en particulier **en ce que** la saillie d'encliquetage (18) est mobile dans la direction radiale vers l'axe central (A).

10. Dispositif de raccordement (1) selon l'une quelconque des revendications 1 à 9,
**caractérisé en ce que**
**en ce que** la pièce d'insertion (3) présente au moins un méplat (20), en particulier au moins deux ou quatre méplats (20) disposés en face l'un de l'autre, et **en ce que** l'ouverture de raccordement (5) présente au moins un méplat (21) correspondant sur la périphérie intérieure, en particulier au moins deux ou quatre méplats (21) disposés en vis-à-vis.

11. Dispositif de raccordement (1) selon l'une des revendications 1 à 10,
**caractérisé en ce que**
l'élément de fixation (4) présente au moins un bord de blocage (25), en particulier que le bord de blocage (25) coopère par complémentarité de forme avec l'élément d'accouplement (2) à l'état monté, de préférence que le bord de blocage (25) présente une hauteur comprise entre 0,1 mm et 0,3 mm, de préférence 0,2 mm.

12. Dispositif de raccordement (1) selon l'une des revendications 1 à 11,
**caractérisé en ce que**
l'élément de fixation (4) produit un bruit d'encliquetage lorsqu'il atteint la position initiale.

13. Dispositif de raccordement (1) selon l'une des revendications 1 à 12,
**caractérisé en ce que**
l'élément de fixation (4) présente sur au moins un côté au moins une bordure de protection périphérique (26), de préférence que l'élément de fixation (4) présente sur deux côtés au moins une bordure de protection périphérique (26).

14. Dispositif de raccordement (1) selon l'une des revendications 1 à 13,
**caractérisé en ce que**
l'élément d'accouplement (2) présente au moins un moyen d'indication d'orientation (32), de préférence deux moyens d'indication d'orientation (32), pour la pièce d'insertion (3), de préférence que la pièce d'insertion (3) présente au moins un moyen d'indication d'orientation (33) correspondant au moyen d'indication d'orientation (32) de l'élément de fixation (4), de préférence deux moyens d'indication d'orientation (33) correspondants.

15. Dispositif de raccordement (1) selon l'une des revendications 1 à 11,
**caractérisé en ce que**
au moins une sécurité anti-torsion (30) est présente, et **en ce que** la sécurité anti-torsion (30) peut être enclenchée par complémentarité de forme avec l'élément d'accouplement (2).
